(19) Europäisches Patentamt

European Patent Office

Office européen des brevets

(11) **EP 0 693 245 B1**

(12) **EUROPEAN PATENT SPECIFICATION**

(45) Date of publication and mention
of the grant of the patent:
**12.07.2000 Bulletin 2000/28**

(21) Application number: **94910456.6**

(22) Date of filing: **23.03.1994**

(51) Int. Cl.[7]: **H04Q 3/66**, H04Q 3/00

(86) International application number:
**PCT/GB94/00601**

(87) International publication number:
**WO 94/23543 (13.10.1994  Gazette 1994/23)**

(54) **METHOD OF CONTROLLING A TELECOMMUNICATIONS NETWORK**

VERFAHREN ZUR STEUERUNG EINES TELEKOMMUNIKATIONSNETZWERKS

PROCEDE DE COMMANDE D'UN RESEAU DE TELECOMMUNICATIONS

(84) Designated Contracting States:
**BE CH DE DK ES FR GB IT LI NL SE**

(30) Priority: **31.03.1993 EP 93302527**

(43) Date of publication of application:
**24.01.1996  Bulletin 1996/04**

(73) Proprietor:
**BRITISH TELECOMMUNICATIONS public limited
company
London EC1A 7AJ (GB)**

(72) Inventor: **CRABTREE, Ian Barry
Ipswich, Suffolk IP9 2NN (GB)**

(74) Representative:
**Dutton, Erica L. G. et al
BT Group Legal Services,
Intellectual Property Department,
8th Floor, Holborn Centre
120 Holborn
London, EC1N 2TE (GB)**

(56) References cited:
EP-A- 0 496 061          WO-A-94/00958
US-A- 4 455 455

• ELECTRONICS & COMMUNICATIONS IN JAPAN,
PART I - COMMUNICATIONS, vol.72, no.5, May
1989, NEW YORK US pages 96 - 107, XP85035
H.TOKUNAGA ET AL. 'Traffic Congestion
Control Based on Call Density Control'
• PROCEEDINGS OF THE INTERNATIONAL
TELETRAFFIC CONGRESS, CNGRESS 13;,
vol.14, 19 June 1991, COPENHAGEN, DE pages
127 - 132, XP000303019 F. LANGLOIS ET AL.
'Dynamic Congestion Control in Circuit-
Switched Telecommunications Networks'
• TWELFTH INTERNATIONAL TELETRAFFIC
CONGRESS, ITC-12,, vol.1, 1 June 1988,
TORINO, IT pages 16 - 27, XP279756 R.G.
ACKERLEY 'Overall Grade-of-Service Models for
the British Telecom Network'
• IEEE TRANSACTIONS ON COMMUNICATIONS,
COM-29,, no.4, April 1981, NEW YORK, US D.G.
HAENSCHKE ET AL. 'Network Management and
Congestion in the U.S. Telecommunications
Network'
• PROCEEDINGS OF THE INTERNATIONAL
TELETRAFFIC CONGRESS, ITC-13,, vol.14, 19
June 1991, COPENHAGEN pages 315 - 322,
XP000303047 X.H.PHAM 'Control Loop for
Traffic Management of Network under Focused
Overloads'
• COMMUTATION ET TRANSMISSION, vol.13,
no.SPEC, 1991, PARIS FR pages 45 - 52,
XP241934 A.PASSERON 'Network Supervision
and Management'

**Description**

This invention relates to a method of controlling a telecommunications network which includes a plurality of interconnected exchanges, in which method call restriction with respect to a first exchange is applied to other exchanges of the network on detection of a focused overload with respect to the first exchange, the call restriction being applied to a different extent at different exchanges of the network.

As discussed, for example, in an article by R G Ackerley "Overall Grade-of-Service Models for the British Telecom Network" in Proceedings of the Twelfth International Teletraffic Congress, ITC 12, vol. 1, 1st June 1988 at pages 16-27 a local exchange is commonly associated with a home exchange, through which incoming calls to the local exchange are routed, and a security exchange, through which outward calls from the local exchange are routed, in normal operation. The security exchange is so called because it can also be used to route incoming calls to the local exchange if the home exchange fails. The security and home exchanges are collectively referred to as the parent exchanges of the local exchange. Exchanges other than the parent exchanges are referred to as far-end trunk exchanges of the local exchanges.

Near real-time network traffic management (NTM) is an essential component of network management if optimal traffic performance in terms of call throughput is to be ensured. To give an indication of the volume of traffic which may be involved, BT's trunk network in the United Kingdom currently handles approximately six million call attempts per hour during the busy periods which is equivalent to 1,700 call attempts per second. Given such a volume of traffic it is essential that any network difficulties are detected and controlled as quickly as possible. For example, difficulties are often encountered by network traffic managers due to abnormal traffic patterns which can be caused by events such as 'phone-ins, tale-votes and public holidays (for example Christmas Day and New Year's Eve/Day). In all these cases traffic in the network varies widely from the normal level, sometimes quite spectacularly, and the network must be controlled to maintain the best overall network performance.

With the introduction of digital switches such as System X it is possible to monitor closely the performance of each exchange and the routes between them and to the subscribers. BT's Network Traffic Management System (NTMS) currently receives statistics on upwards of 37,000 routes from 490 exchanges in the UK every five minutes, this measurement period being chosen to be a long enough period to be able to obtain a statistically reliable measurement of the network performance whilst being short enough to allow effective real-time control of the network.

(It might be noted that other communication networks carry different traffic patterns, and can be equipped with different network hardware and that therefore other measurement periods are sometimes found appropriate. For instance a lot of "Telcos", or telecommunications companies, use a measurement period of 15 minutes.)

The information received by the NTMS is processed to provide CCITT recommended parameters. The parameter values are compared with thresholds to determine if any difficulties exist on the monitored network elements.

Usually the first indication of a network problem is when an 'exception' is displayed on a wall-board, or on a graphical interface at an individual manager's workstation, at a Traffic Management Centre. Exceptions are those parameter values, calculated from network element measurements, which deviate sufficiently from a predetermined threshold for that value. The exceptions are ranked in a priority order with the top 20 displayed. However, due to the manner in which the thresholds are set by the network traffic managers, some exceptions do not necessarily indicate a difficulty as thresholds are percentage-based and set a value which ensures all potential difficulties are captured. This results in exceptions being displayed that are occasionally spurious or insignificant. The exceptions therefore need to be examined in more detail to determine if a real difficulty exists and whether it warrants any action. To help in this activity several information sources are currently used by the network traffic managers.

The NTMS provides near real-time surveillance and monitoring of the network's status and performance. It provides the network traffic managers with information to enable them take prompt action to control the flow of traffic to ensure the maximum utilization of the network in all situations. The NTMS allows network traffic managers to look at the raw statistics as well as derived generic parameters and to compare traffic patterns over the last few measurement periods to isolate any trends.

An On-Line Traffic Information System (OTIS) takes the measurement of statistics from the NTMS system and processes them to provide summarised historical data for daily and weekly traffic patterns. This system allows the network traffic managers to examine historical traffic patterns to detect any radical shifts in traffic.

A data management system provides the network traffic managers with an up-to-date copy of the routing tables at all trunk exchanges. This information is used to check the routes to which calls can be routed, which controls are in force and the routing algorithms being used.

There is also a broadcast speaker facility which connects the world-wide network management centre to all the regional centres.

Once a potential difficulty has been detected, acknowledged and analyzed, it is characterised and a decision made whether to control it using the available range of expansive and restrictive controls to either allow alternative traffic paths through the network or to restrict or block call attempts to particular areas, respectively. The situation must then be monitored to ensure the controls are having the desired effect and that they are removed as soon as a problem has been dealt with effectively.

It is important that the controls applied are sufficient to suppress the problem yet not so severe that they cause their own problems by congesting other parts of the network or by blocking potentially successful calls.

One class of exception associated with telecommunications networks is the focused overload. The All Circuits Engaged (ACE) CCITT parameter may be monitored in order to determine when a focused overload occurs but this has been found to be not very satisfactory at present and will be less so in the near future, when call failures will only be shown (on a wallboard) with respect to the last of several routes tried. Currently, all the routes tried are shown and focused overloads give rise to a graphic "star" effect on a wallboard.

A preferred method of detecting a focused overload is as described in a British patent application filed by the present applicant on 12th May 1992, being allocated number 9210173.2 (ie. GB9210173.2), and in the equivalent United States patent application number 115689 filed on 3rd September 1993, in the name CRABTREE, and the subject matter disclosed therein is incorporated herein by reference.

The present invention is, however, directed to a method of controlling a network once a focused overload condition has been detected by whatever method.

An article by H Tokunaga et al entitled "Traffic Congestion Control Based on Call Density Control" at pages 96-107 of Electronics and Communications in Japan, Part 1 - Communications, vol. 72, no. 5, May 1989 discloses a method of the general kind defined in the first paragraph hereof. In the known method the extent to which call restriction is applied at different exchanges of the network is selected in accordance with the size of the relevant exchange and the capacity of the relevant channel.

EP-A-0496061 discloses a method for real-time traffic management of a network which is divided into subnets each having a controller. Subnet controllers periodically receive data from their subnet nodes on their current state, i.e. the number of busy circuits on their outgoing trunk groups and the amount of traffic to all destinations in the preceding measurement period, and also, for each neighbouring subnet, data from the respective controller on the residual capacities of the least loaded paths from the respective common gateway nodes to its internal subnet nodes and on aggregated offered traffic from each gateway destined for nodes/gateways of other subnets. Based on this data, subnet controllers act to reroute intrasubnet traffic when the projected incoming load for an intrasubnet source/destination pair exceeds the trunk group capacity of the existing route, and where source nodes are contending for trunk group capacity, i.e. their combined demand exceeds the trunk group capacity, they are controlled such that they each reject the same fraction of their demand for the destination. The effect of this intercommunication of data between controllers and the periodic calculation of traffic routing variables is to converge the network to an equilibrium condition in which load is shared evenly amongst the trunk groups, and contention for offered traffic over a trunk group is dealt with fairly by equalising the rejection fraction for those contending sources.

According to a first aspect of the present invention there is provided a method of controlling a telecommunications network which includes a plurality of interconnected local and trunk exchanges, the method comprising the steps of:

(a) detecting the occurrence of a focused overload with respect to a said local exchange connected to one or more parent trunk exchanges ;
(b) upon the detection of said occurrence, calculating the respective relative contribution made to the focused overload over each respective route

(i) from exchanges to the said parent trunk exchange or exchanges associated with the said local exchange, and, in the event that the said local exchange is directly connected to one or more neighbouring local exchanges,
(ii) from said neighbouring local exchange or exchanges; and

applying, in accordance with said respective relative contributions, respective call restriction at each of the respective exchanges connected to the remote ends of said routes, herein referred to as the controlled exchanges.

According to a second aspect of the present invention there is provided a traffic management system for use in controlling a telecommunications network which includes a plurality of interconnected local and trunk exchanges the system comprising means arranged

(a) to detect the occurrence of a focused overload with respect to a said local exchange connected to one or more parent trunk exchanges;
(b) to calculate, in response to the detection of said occurrence, the respective relative contribution made to the focused overload over each respective route

(i) from exchanges to the said parent trunk exchange or exchanges associated with the said local exchange, and, in the event that the said local exchange is directly connected to one or more neighbouring local exchanges,

(ii) from said neighbouring local exchange or exchanges; and

(c) to generate, in accordance with said respective relative contributions, respective call restriction control signals for application to each of the respective exchanges connected to the remote ends of said routes, herein referred to as the controlled exchanges.

"Call restriction" is a term used herein to indicate a network control step which limits the number of calls made by blocking attempts at a point in the network. It can be implemented in different ways, including call gapping, in which fixed length intervals are enforced during which no call can be made. For instance, five second call-free intervals may be imposed. Another form of call restriction is proportional call blocking, in which only a percentage of bids are accepted. For instance, every tenth call might go forward. A third approach is to allow a maximum number of calls to go through in any one time period, such as one call every five seconds.

Selecting the extent to which call restriction is applied at different exchanges of the network in accordance with the relative contributions made to the focused overload via the different exchanges of the network might be done by making the call restriction level for a route inversely proportional to that route's contribution.

In more detail, a call restriction level might suitably be set as follows. A value $B_t$ is selected as the total bids per measurement period which it is desired should be made to an overloaded number. A value $B_o$ is estimated as the total number of bids actually made, without call restriction, as a result of a focused overload. On each route to be call restricted a number of bids to be made on that route after call restriction has been applied, $b_g$, is allocated, this being determined by the proportion of $B_o$ carried by that route. The call restriction level on that route is then set appropriately. For instance, in the case of call gapping, the call gap rate in seconds for a single route, g, is then given by :

$$g = \frac{\text{measurement period in seconds}}{b_g}$$

A suitable measurement period might for instance be 5 minutes.

If proportional call blocking is substituted for call gapping, the call gap route value, g, can simply be used as a measure of the proportion of calls which will be blocked, for instance nineteen out of every twenty potential bids.

As discussed in the above mentioned GB9210173.2, and US 115689/93, the criteria used for applying call restriction, in a method according to the present invention, might include a rise in the Bids per Circuit per Hour (BCH) from a parent exchange to the local exchange. The BCH parameter on a route between a pair of exchanges gives a normalised indication of the number of call attempts down that route and will generally stay well below the maximum BCH that can be handled by the exchanges under normal conditions. It will however tend to move to and above that value during a focused overload.

The BCH will also rise due to an increase in country-wide traffic to a large number of subscribers served by a given local exchange, for example when a disaster befalls an area, but this will not necessarily result in a focused overload if a sufficiently high number of calls continue to be connected. The inclusion of a test of the Answer Seizure Ratio (ASR), together with a test of the relevant BCH, serves to distinguish between these two scenarios. Preferably, therefore, call restriction is applied according to the criteria disclosed in GB9210173.2 and US 115689/93. That is, it is applied when the BCH from a parent exchange to the relevant local exchange rises above a first threshold, and the ASR on a primary traffic route from that parent exchange to the local exchange stays below a second threshold for the duration of a measurement period. (A primary traffic route is the route first tried for a call in a network, all alternative routes then being secondary.) This takes account of the fact that, during a focused overload, the average ASR on the trunk primary traffic routes into the home exchange drops very sharply and can remain low for a number of measurement periods before slowly returning to its normal value whereas a general increase in traffic to a local exchange does not have this effect.

An embodiment of the present invention will now be described, by way of example only, with reference to the accompanying drawings in which:

Figure 1 shows a schematic representation of part of a telecommunications network to which call restriction might be applied;
Figure 2 shows in more detail aspects of the network of Figure 1;
Figure 3 shows a schematic representation of a control system for implementing a method of the present invention; and

Figure 4 shows a schematic representation of a control system for implementing a method of the present invention, using direct control of a network by a computer.

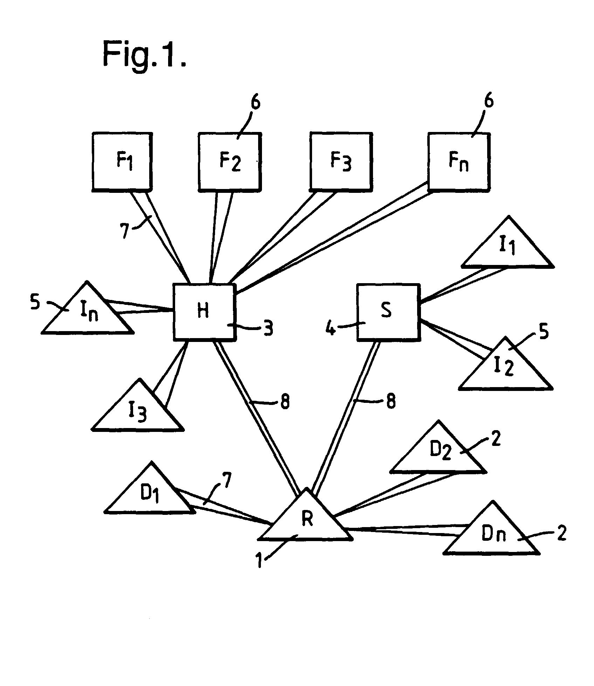

Referring to Figure 1, a telecommunications network to which call restriction might be applied comprises a local exchange 1, together with other exchanges connected directly or indirectly. The other exchanges fall into categories comprising directly connected local exchanges 2, the home exchange 3 of the local exchange 1, the security exchange 4 of the local exchange 1, indirectly connected local exchanges 5 and far end trunk exchanges 6.

Routes between the exchanges that are monitored for the purposes of controlling a focused overload fairly, routes 7, are depicted in Figure 1 by arrows, the base of the arrow indicating in each case where call restriction control would be applied in a method according to an embodiment of the present invention. Hence, call restriction would be applied at the directly connected local exchange end of the route 7 between a directly connected local exchange 2 and the local exchange 1 which is subject to a focused overload. In the case of other exchanges, call restriction might be applied at the far end trunk exchanges 6 or at the indirectly connected local exchanges 5, but not at a parent exchange 3, 4. There are two unmonitored routes 8, between the parent exchanges 3, 4 and the local exchange 1 subject to a focused overload.

In practice, once a focused overload has been detected, to control that overload in a fair manner, the following steps are carried out:

(i) an estimate of the total increase in bids due to the overload, $B_0$, is made according to the following;

$$B_0 = \sum_{D_n} (b_c - b_a) + \sum_{I_n} (b_c - b_a) + \sum_{F_n} (b_c - b_a)$$

where

$b_c$ is the number of bids on a route in the measurement time period *immediately* after the overload is detected, and

$b_a$ is the number of bids on that route in the measurement time period *immediately* before the overload is detected.

In the notation used here, "$D_n$" refers to a sum over routes from all the directly connected local exchanges 2, "$I_n$" refers to a sum over routes from all the indirectly connected local exchanges 5 and "$F_n$" refers to a sum over routes from all the far end trunk exchanges 6.

(ii) to ensure that there is more than enough traffic offered to the overloaded number to avoid for example loss of revenue, an estimate is made of the maximum number of bids to the overloaded number that could be handled in a measurement period, based on average call duration and the number of customer lines that can be answered simultaneously, this number then being multiplied upwards, for instance typically in the UK public network by a factor in the range from 4 to 10, to arrive at a value $B_t$ for total bids to the customer.

(iii) on each outgoing route from a far end trunk exchange 6, an indirectly connected local exchange 5 or directly connected local exchange 2, the number of bids after call restriction has been applied, $b_g$ is given by

$$b_g = \frac{(b_c - b_a)}{B_0} B_t$$

(iv) finally, if call gapping is the restrictive technique to be used, the call gap rate, g, in seconds, on each outgoing route is given by

$$g = \frac{300}{b_g}$$

(The measurement period is set at five minutes here, to give the constant 300 which is the number of seconds in a five minute period.)

Hence, call gap rates depending on the contribution a route makes to a focused overload are applied to achieve a fairer distribution of successful calls in a case of a focused overload.

As mentioned above, if the restrictive technique is to be proportional call blocking, then "g" can instead be used as a measure of the proportion of call attempts to be blocked.

In practice, there may be routes which have negligible or no detectable traffic contributing to a focused overload, which would lead to an infinite or ridiculously high call restriction level, and it may be preferable to set a maximum restriction level which might be used in these cases.

In general, however, it can be seen that the call restriction level on each outgoing route 7 is inversely proportional to the excess traffic generated by that route. Therefore, the higher the bid rate, the lower the call restriction, that is, the lower the call gap rate or the proportion of calls blocked, ensuring that traffic allowed through is proportional to the traffic offered. Because the call restriction levels are selected on the basis of offering a total number of bids to the customer which is, say, 4 to 10 times higher than the maximum which can be dealt with, the above also ensures that the total traffic offered to the customer via the local exchange 1 is always in excess of the traffic they can handle.

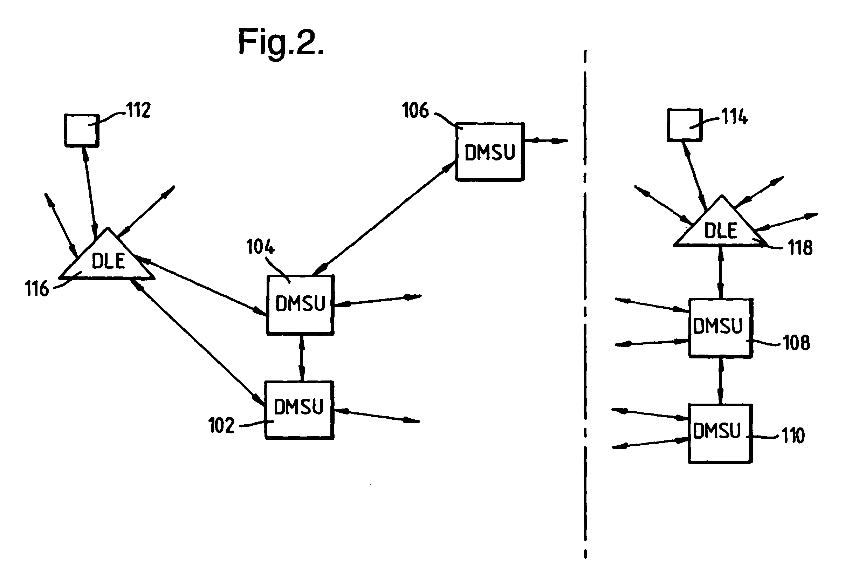

Referring to Figure 2, a telecommunications network may generally comprise a number of digital main switch units (DMSUs) -trunk exchanges - of which only five are shown for clarity and are referenced 102, 104, 106, 108 and 110. These are equivalent to the parent and far end trunk exchanges, 3, 4, 6, of Figure 1. Subscribers' customer premises equipment, of which only two sets are shown, referenced 112 and 114, are connected to these DMSUS, 102 to 110, via respective digital local exchanges (DLEs) 116 and 118.

One DLE 116 is connected to a DMSU 102 through which incoming calls to the subscribers attached to the DLE 116, including subscriber 112, are routed. The DMSU 102 is therefore a home trunk exchange for the DLE 116, equivalent to the home exchange 3 of Figure 1. The DLE 116 is also connected to a second DMSU 104 through which outgoing calls from the DLE 116 are routed. This second DMSU 104 is a security exchange since incoming calls to the exchange 116 can be routed through it should the home trunk exchange DMSU 102 fail, and it is therefore equivalent to the security exchange 4 of Figure 1.

Similarly, there is a home exchange DMSU 108 for the other digital local exchange 118 shown in Figure 2.

The home and security exchanges 102, 104 are thus the parent exchanges associated with the first DLE 116. Those exchanges other than the parent exchanges, the DMSUs referenced 106, 108, 110 in Figure 2, are the far-end trunk exchanges of the first DLE 116 and therefore equivalent to the far-end trunk exchanges 6 of Figure 1.

If a large number of calls are attempted to a subscriber's customer premises equipment 112 within too short a period, the digital local exchange 116 may not be able to handle the calls and in extreme cases the DLE might also go into overload. This will block unrelated traffic in the area around the destination exchange. This is a focused overload which needs to be controlled if congestion is to be avoided.

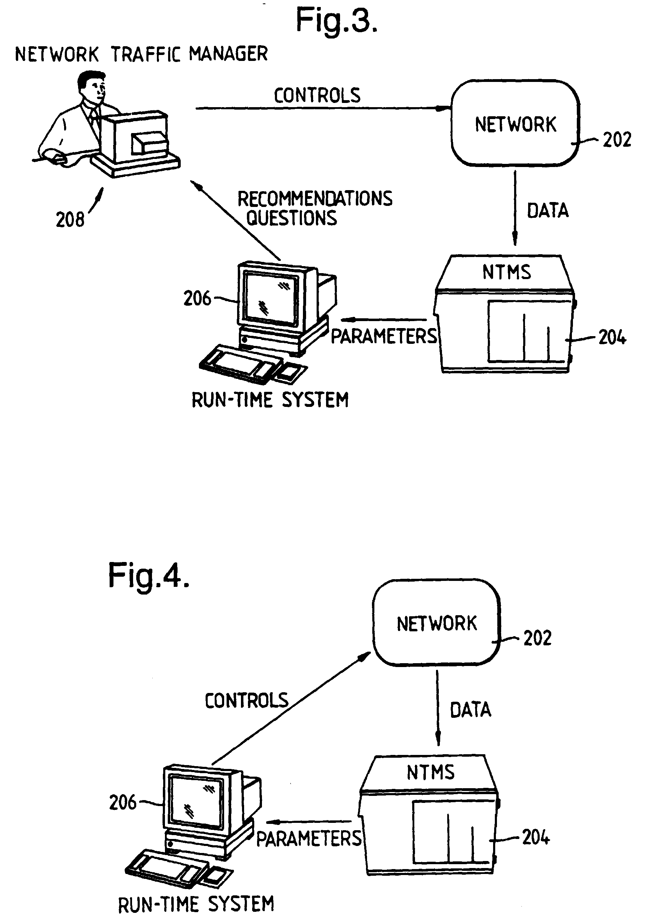

A method of controlling a telecommunications network such as that illustrated in Figure 2 will now be described with additional reference to Figure 3 which shows a network control system implementing the method of the present invention. This method is also disclosed in the above mentioned GB9210173.2, and US 115689/93, and is merely repeated herein for completeness.

Referring to Figure 3 the network of Figure 2 is denoted by box 202. Every five minutes, which is the selected measurement period of the network of Figure 2 in this case, a set of statistics is generated by the digital exchanges of the network 202 which is processed by an NTMS system 204 to provide generic measurement values including those of the CCITT recommendation. These parameters are input to a run-time system 206 which applies rules to the received parameters from the NTMS 204 by means of an appropriately coded expert system. The run-time system 206 provides recommendations to aid a network traffic manager 208 to detect and control focused overload problems in the network 202 according to the method of the present invention.

The NTMS 204 is an extensive and complex system which collates incoming data. It is, in the British PSTN, provided with huge visual screens and "dumb" terminals, for use by operators, managers or others. Data can be processed by the NTMS or pulled off into workstations to do analysis and output recommendations or controls. In the following, data is pulled off into a "run-time system" 206 provided at a "Sparc" workstation.

The run-time system 206 monitors data coming from each local exchange and determines when the BCH along the route from the home trunk exchange 102 of a local exchange, assumed in this case to be local exchange 116 of Figure 2, exceeds 30 and also the BCH averaged over trunk primary traffic routes to that home exchange 102 have increased by 40% since the last measuring period. When these conditions are satisfied, the run-time system supplies a recommendation to the network traffic manager 208 to apply focused overload controls with respect to the local exchange 116 affected.

The run-time system 206 also provides recommendations to the network traffic manager 208 based on ASR conditions. In particular, call restriction will be applied with respect to numbers of the local exchange 116 once the ASR from the parent trunk exchange to the local exchange 116 has remained at less than 20% for the duration of a five minute measuring period and the BCH along the route from the parent trunk exchange to the local exchange 116 is greater than 10.

The run-time system 206 will also recommend call restriction to numbers of the local exchange 116 at far-end trunk exchanges 106 to 110 of the local exchange 116 when the ASR along the route from the far-end trunk exchange to a parent exchange 102,104 of the local exchange 116 falls below 45%.

As a focused overload eases up, the run-time system 206 will recommend to the network traffic manager 208 when the call restriction at a given trunk exchange should cease. Advice is given to remove call restriction with respect to the local exchange 116 once the ASR to the local exchange 116 is greater than 50% and the percentage occupancy (OCC) along the route from the parent trunk exchange to the local exchange 116 is less than 80% for the measuring period, and to remove the call gapping of the far-end trunk exchanges 106 to 110 of the local exchange 116 once the ASR along the route from the far-end trunk exchange to the parent exchange 102 of the local exchange 116 once again rises above 45%. (The percentage occupancy is the total traffic in Erlangs, divided by the number of in-service circuits on a route).

These focused overload controls are applied to the trunk exchanges 102 to 110 unless the run-time system 206 recommends that focused overload controls no longer need to be applied notwithstanding that a local control may still be in force to ensure all controls are eventually removed. In the present embodiment this occurs once the BCH along the route from the home exchange 102 to the local exchange 116 falls to a value less than five.

It is envisaged that the run-time system 206 may directly control the network as shown in Figure 4 but at present it is expected that it will be necessary for a network traffic manager 208 to implement the method to allow overriding of the recommendations at his or her discretion.

The method described above can be simulated on a computer representation of BT's UK telecommunications network in which the run-time system 206 comprises a PROLOG-based expert system coded with the rules necessary to provide the recommendations described above in response to the appropriate CCITT parameters from the NTMS 204. This is also described in the above mentioned GB9210173.2 and US 115689/93. In embodiments of the present invention, however, an arrangement as described above with reference to Figures 2,3 and 4 can be used to generate recommendations to apply differing call restriction levels to different routes of the network 202 so as to avoid, for instance, heavy call restriction on routes which make almost no contribution to a focused overload. That is, the arrangement described in general terms with reference to Figure 1 can be embodied by the arrangement described with reference to Figures 2, 3 or 4.

In an example of such a system, parameters supplied to the NTMS system 204 are processed by the run-time system 206 so as to provide recommendations for specific call restriction levels to be applied at different points in the network 202. To do this, as described above, the change in bids on each route under consideration in the event of a focused overload is looked at in the context of the total change in bids, $B_0$, generated by the overload. Thus, as a starting point, the total change in bids, $B_0$, is again calculated, followed by the total bids to the customer, "$B_t$", which it is desired should be offered after call restriction to ensure call restriction leaves very little or no "idle" time. Typically, the factor might be selected to be in the range from 4 to 10 in the British public switched telephone network. (This factor may vary according for instance to the type of network in which the call restriction is being applied, or according to prior agreement with a relevant customer.)

On each outgoing route, from each of the far end trunk exchanges or DMSUs 106, and the directly or indirectly connected local exchanges (none shown in Figure 2), the number of bids desired per measurement time period after restriction has been applied, "$b_g$", is assessed which in turn gives a measure of the extent of call restriction which will be necessary. For instance, if call gapping is to be applied, the call gap rate, "g", in seconds, on each of these outgoing routes, can be calculated as;

$$g = \frac{300}{b_g}$$

where a measurement time period is 5 minutes.

The effect of applying selective call gapping in the way described above as an embodiment of the present invention is that the call gap rate in seconds on a relevant route is inversely proportional to the excess traffic on that route due to the overload. It also ensures the total number of bids offered is high enough to avoid any loss of traffic actually dealt with. That is;

    a. the traffic allowed through is proportional to the traffic offered, so ensuring fairness, and
    b. the total traffic offered to the customer is always in excess of the traffic they can handle.

However, as a general principle, it is the application of call gapping beyond or excluding the routes between the parent exchanges 102, 104 and the local exchange 116 which is overloaded which allows call gapping to be applied in a selective manner.

If other call restriction methods such as proportional call blocking are used in place of call gapping, then "g" can instead be used as a measure of the proportion of calls to be blocked, rather than as a call gap rate in seconds.

**Claims**

1.  A method of controlling a telecommunications network which includes a plurality of interconnected local and trunk exchanges (1,2,3,4,5,6), the method comprising the steps of:

    (a) detecting the occurrence of a focused overload with respect to a said local exchange (1) connected to one or more parent trunk exchanges (3,4);
    (b) upon the detection of said occurrence, calculating the respective relative contribution made to the focused overload over each respective route (7)

       (i) from exchanges (5,6) to the said parent trunk exchange or exchanges (3,4) associated with the said local exchange (1), and, in the event that the said local exchange (1) is directly connected to one or more neighbouring local exchanges (2),
       (ii) from said neighbouring local exchange or exchanges (2); and

    (c) applying, in accordance with said respective relative contributions, respective call restriction at each of the respective exchanges (2,5,6) connected to the remote ends of said routes, herein referred to as the controlled exchanges.

2.  A method as claimed in Claim 1, wherein the focused overload is in respect of calls attempted to a target customer premises equipment (112), and wherein step (b) comprises the substeps of:

    (b1) estimating for each of said controlled exchanges (2,5,6) the respective number of bids at that exchange occurring in a measurement time period and associated with the focused overload;
    (b2) summing the respective estimated numbers of bids produced by substep (b1) to produce an estimate of the total number of bids occurring in the measurement time period and associated with the focused overload; and wherein step (c) comprises the substeps of:
    (c1) allocating in respect of said target customer premises equipment a maximum value for the total number of bids to be made by said controlled exchanges in a measurement time period; and
    (c2) apportioning said maximum value amongst said controlled exchanges such that each apportionment is in direct relation to the ratio of the respective numbers of bids produced in substep (b1) to the total number of bids produced in substep (b2).

3.  A method as claimed in claim 2, wherein, in the event that a respective apportionment is less than a predetermined minimum value, step (c) comprises applying call restriction in accordance with said predetermined minimum value instead of said respective apportionment.

4.  A traffic management system for use in controlling a telecommunications network which includes a plurality of interconnected local and trunk exchanges (1,2,3,4,5,6), the system comprising means (204, 206) arranged

    (a) to detect the occurrence of a focused overload with respect to a said local exchange (1) connected to one or more parent trunk exchanges (3,4);
    (b) to calculate, in response to the detection of said occurrence, the respective relative contribution made to the focused overload over each respective route

       (i) from exchanges (5,6) to the said parent trunk exchange or exchanges (3,4) associated with the said local exchange (1), and, in the event that the said local exchange (1) is directly connected to one or more neighbouring local exchanges (2),
       (ii) from said neighbouring local exchange or exchanges (2); and

    (c) to generate, in accordance with said respective relative contributions, respective call restriction control signals for application to each of the respective exchanges (2,5,6) connected to the remote ends of said routes, herein referred to as the controlled exchanges.

5.  A system as claimed in claim 4, wherein said means (204,206) is arranged to calculate said respective relative contributions by

estimating for each of said controlled exchanges (2,5,6) the respective number of bids at that exchange occurring in a measurement time period in respect of calls attempted to a target customer premises equipment (112) at said local exchange (1), the subject of the detected focused overload;
obtaining the sum of the respective numbers of bids thus estimated, and thereby an estimate of the total number of bids occurring in the measurement time period and associated with the focused overload; and calculating the ratios of said respective number of bids to said sum, and thereby said respective relative contributions;
and arranged to generate said respective call restriction control signals by
allocating in respect of said target customer premises equipment (112) a maximum value for the total number of bids to be made by said controlled exchanges (2,5,6) in a measurement time period;
apportioning said maximum value amongst said controlled exchanges (2,5,6) such that each apportionment is in direct relation to the ratio of the corresponding respective number of bids to said sum; and
forming each said respective call restriction control signal as an inverse function of the corresponding respective apportionment.

**6.** A system as claimed in claim 5, wherein said means (204,206) is arranged, in the event that a respective apportionment is less than a predetermined minimum value, to form said control signals in accordance with said predetermined minimum value instead of said respective apportionment.

## Patentansprüche

**1.** Verfahren zum Steuern eines Telekommunikationsnetzwerkes mit mehreren untereinander verbundenen lokalen und Hauptvermittlungen (1, 2, 3, 4, 5, 6), wobei das Verfahren die Schritte umfaßt:

(a) Erfassen des Auftretens einer fokussierten Überlastung mit Bezug auf eine lokale Vermittlung (1), die mit einer oder mehreren Ursprungshauptvermittlungen (3, 4) verbunden ist,
(b) bei Erfassen des besagten Auftretens Berechnen des jeweiligen relativen Beitrags zu der fokussierten Überlastung über jede jeweilige Verbindung (7)

(i) von Vermittlungen (5, 6) zu der Ursprungshauptvermittlung oder Vermittlungen (3, 4), die mit der lokalen Vermittlung (1) zusammenhängen, und für den Fall, daß die lokale Vermittlung (1) direkt mit einer oder mehreren benachbarten lokalen Vermittlungen (2) verbunden ist,
(ii) von der benachbarten lokalen Vermittlung oder Vermittlungen (2), und

(c) Einsetzen in Übereinstimmung mit den jeweiligen relativen Beiträgen einer jeweiligen Anrufeinschränkung bei jeder der jeweiligen Vermittlungen (2, 5, 6), verbunden mit den entfernten Enden der Verbindungen, die hier als gesteuerte Vermittlungen bezeichnet werden.

**2.** Verfahren nach Anspruch 1, bei dem die fokussierte Überlastung sich auf zu einer Zielkundeneinrichtung (112) versuchte Anrufe bezieht und bei dem Schritt (b) die Teilschritte umfaßt:

(b1) Abschätzen für jede der gesteuerten Vermittlungen (2, 5, 6) der jeweiligen Anzahl von Anfragen an die Vermittlung in einem Meßzeitintervall und in Zusammenhang mit der fokussierten Überlastung,
(b2) Aufsummieren der jeweiligen abgeschätzten Zahlen von Anfragen in Teilschritt (b1), um eine Abschätzung der Gesamtzahl der Anfragen in dem Meßzeitintervall und in Zusammenhang mit der fokussierten Überlastung zu erzeugen,
und bei dem der Schritt (c) die Teilschritte umfaßt:
(c1) Zuordnen in Bezug auf die Zielkundeneinrichtung eines Maximalwertes für die Gesamtzahl von Anfragen, die durch die gesteuerten Vermittlungen in einem Meßzeitintervall gemacht werden, und
(c2) Aufteilen des Maximalwerts auf die gesteuerten Vermittlungen, so daß jeder Anteil in direkter Beziehung zu dem Verhältnis der jeweiligen Zahlen der Anfragen in Teilschritt (b1) zu der Gesamtzahl der Anfragen in Teilschritt (b2) steht.

**3.** Verfahren nach Anspruch 2, bei dem für den Fall, daß ein jeweiliger Anteil kleiner als ein vorgegebener Minimalwert ist, Schritt (c) das Einsetzen der Anrufeinschränkung in Übereinstimmung mit dem vorgegebenen Minimalwert anstelle des jeweiligen Anteils umfaßt.

**4.** Verkehrsverwaltungssystem für die Verwendung bei der Steuerung eines Telekommunikationsnetzwerkes mit mehreren untereinander verbundenen lokalen und Hauptvermittlungen (1, 2, 3, 4, 5, 6), wobei das System Vorrichtungen (204, 206) umfaßt, die eingerichtet sind zum

(a) Erfassen des Auftretens einer fokussierten Überlastung mit Bezug auf eine lokale Vermittlung (1), die mit einer oder mehreren Ursprungshauptvermittlungen (3, 4) verbunden ist,

(b) bei Erfassen des besagten Auftretens Berechnen des jeweiligen relativen Beitrags zu der fokussierten Überlastung über jede jeweilige Verbindung (7)

(i) von Vermittlungen (5, 6) zu der Ursprungshauptvermittlung oder Vermittlungen (3, 4), die mit der lokalen Vermittlung (1) zusammenhängen, und für den Fall, daß die lokale Vermittlung (1) direkt mit einer oder mehreren benachbarten lokalen Vermittlungen (2) verbunden ist,

(ii) von der benachbarten lokalen Vermittlung oder Vermittlungen (2), und

(c) Erzeugen in Übereinstimmung mit den jeweiligen relativen Beiträgen von jeweiligen Anrufeinschränkungssteuersignalen für jede der jeweiligen Vermittlungen (2, 5, 6), verbunden mit den entfernten Enden der Verbindungen, die hier als gesteuerte Vermittlungen bezeichnet werden.

**5.** System nach Anspruch 4, bei dem die Vorrichtung (204, 206) eingerichtet ist, um die jeweiligen relativen Beiträge zu berechnen durch

Abschätzen für jede der gesteuerten Vermittlungen (2, 5, 6) der jeweiligen Anzahl von Anfragen bei der Vermittlung in einem Meßzeitintervall in Bezug auf versuchte Anrufe an eine Zielkundeneinrichtung (112) bei der lokalen Vermittlung (1), bei der die fokussierten Überlastung auftritt,

Aufsummieren der jeweiligen abgeschätzten Zahlen von Anfragen, um eine Abschätzung der Gesamtzahl der Anfragen in dem Meßzeitintervall und in Zusammenhang mit der fokussierten Überlastung zu erzeugen, und Berechnen der Verhältnisse der jeweiligen Anzahl von Anfragen zu der Summe und damit der jeweiligen relativen Beiträge,

und um die jeweiligen Anrufeinschränkungssteuersignale zu erzeugen durch:

Zuordnen in Bezug auf die Zielkundeneinrichtung (112) eines Maximalwertes für die Gesamtzahl von Anfragen, die durch die gesteuerten Vermittlungen (2, 5, 6) in einem Meßzeitintervall gemacht werden, und

Aufteilen des Maximalwerts auf die gesteuerten Vermittlungen (2, 5, 6), so daß jeder Anteil in direkter Beziehung zu dem Verhältnis der jeweiligen Zahlen der Anfragen zu der Summe steht, und

Erzeugen jedes jeweiligen Anrufeinschränkungssteuersignals als inverse Funktion des jeweiligen, entsprechenden Anteils.

**6.** System nach Anspruch 5, bei dem die Vorrichtungen (204, 206) eingerichtet sind, so daß bei einem jeweiligen Anteil, der kleiner als ein vorgegebener Minimalwert ist, die Steuersignale in Übereinstimmung mit dem vorgegebenen Minimalwert anstelle des jeweiligen Anteils erzeugt werden.

**Revendications**

**1.** Procédé de commande d'un réseau de télécommunications qui comprend un certain nombre de centraux locaux et interurbains interconnectés (1,2,3, 4, 5, 6), le procédé comprenant les étapes consistant à :

(a) détecter l'occurrence d'une surcharge concentrée concernant un dit central local (1) relié à un ou plusieurs centraux interurbains parents (3, 4),

(b) lors de la détection de ladite occurrence, calculer la contribution relative respective faite à la surcharge concentrée sur chaque itinéraire respectif (7)

(i) depuis les centraux (5, 6) vers ledit central interurbain parent ou les centraux (3, 4) associés audit central local (1), et dans le cas où ledit central local (1) est directement relié à un ou plusieurs centraux locaux voisins (2),

(ii) depuis ledit central ou les centraux locaux voisins (2), et

(c) appliquer, conformément auxdites contributions relatives une restriction des appels respective à chacun des centraux respectifs (2, 5, 6) reliés aux extrémités distantes desdits itinéraires, appelés ici centraux commandés.

**2.** Procédé selon la revendication 1, dans lequel la surcharge concentrée concernant des appels tentés vers un équipement des locaux d'un usager cible (112), et dans lequel l'étape (b) comprend les sous-étapes consistant à :

(b1) estimer pour chacun desdits centraux commandés (2, 5, 6) le nombre respectif de tentatives de prise au niveau de ce central apparaissant dans un intervalle de temps de mesure et associées à la surcharge concentrée,

(b2) établir la somme des nombres estimés respectifs des tentatives de prise produites par la sous-étape (b1) afin de produire une estimation du nombre total des tentatives de prise apparaissant dans l'intervalle de temps de mesure et associées à la surcharge concentrée,

et dans lequel l'étape (c) comprend les sous-étapes consistant à :

(c1) allouer en fonction dudit équipement des locaux d'un usager cible une valeur maximum du nombre total des tentatives de prise devant être faites par lesdits centraux commandés dans un intervalle de temps de mesure, et

(c2) proportionner ladite valeur maximum entre lesdits centraux commandés de manière à ce que chaque proportion soit en relation directe avec le rapport des nombres respectifs des tentatives de prise produites à la sous-étape (b1) sur le nombre total des tentatives de prise produites à la sous-étape (b2).

**3.** Procédé selon la revendication 2, dans lequel, dans le cas où une proportion respective est inférieure à une valeur minimum prédéterminée, l'étape (c) comprend l'application d'une restriction des appels conformément à ladite valeur minimum prédéterminée au lieu de ladite proportion respective.

**4.** Système de gestion de trafic destiné à être utilisé pour commander un réseau de télécommunications qui comprend un certain nombre de centraux locaux et interurbains interconnectés (1, 2, 3, 4, 5, 6), le système comprenant un moyen (204, 206) agencé

(a) pour détecter l'occurrence d'une surcharge concentrée concernant un dit central local (1) relié à un ou plusieurs centraux interurbains parents (3, 4),

(b) pour calculer, en réponse à la détection de ladite occurrence, la contribution relative respective faite à la surcharge concentrée sur chaque itinéraire respectif

(i) à partir des centraux (5, 6) vers ledit central interurbain parent ou les centraux (3, 4) associés audit central local (1), et, dans le cas où ledit central local (1) est directement relié à un ou plusieurs centraux locaux voisins (2),

(ii) depuis ledit central ou les centraux locaux voisins (2), et

(c) pour générer, conformément auxdites contributions relatives respectives, des signaux de commande de restriction des appels respective en vue d'une application à chacun des centraux respectifs (2, 5, 6) reliés aux extrémités distantes desdits itinéraires, appelés ici centraux commandés.

**5.** Système selon la revendication 4, dans lequel ledit moyen (204, 206) est agencé pour calculer lesdites contributions relatives respectives par

une estimation pour chacun desdits centraux commandés (2, 5, 6), du nombre respectif des tentatives de prise au niveau de ce central apparaissant dans un intervalle de temps de mesure en fonction des appels tentés vers un équipement des locaux d'un usager cible (112) audit central local (1), qui fait l'objet de la surcharge concentrée détectée,

l'obtention de la somme des nombres respectifs des tentatives de prise ainsi estimée, et donc d'une estimation du nombre total des tentatives de prise apparaissant dans l'intervalle de temps de mesure et associées à la surcharge concentrée, et

le calcul des rapports dudit nombre respectif des tentatives de prise sur ladite somme, et ainsi desdites contributions relatives respectives,

et agencé pour générer lesdits signaux de commande de restriction des appels respective par

une allocation en fonction dudit équipement des locaux de l'usager cible (112) d'une valeur maximum pour le nombre total des tentatives de prise devant être faites par lesdits centraux commandés (2, 5, 6) dans un intervalle de temps de mesure,

un proportionnement de ladite valeur maximum entre lesdits centraux commandés (2, 5, 6) de sorte que chaque proportion soit en relation directe avec le rapport du nombre respectif correspondant de tentatives de prise sur ladite somme, et

en élaborant chaque dit signal de commande de restriction des appels respective en fonction inverse de la proportion respective correspondante.

6. Système selon la revendication 5, dans lequel ledit moyen (204, 206) est agencé, dans le cas où une proportion respective est inférieure à une valeur minimum prédéterminée, pour élaborer lesdits signaux de commande conformément à ladite valeur minimum prédéterminée au lieu de ladite proportion respective.

# Fig.1.

## Fig.2.

# Fig.3.

NETWORK TRAFFIC MANAGER

CONTROLS

NETWORK — 202

208

RECOMMENDATIONS
QUESTIONS

DATA

206

NTMS

PARAMETERS — 204

RUN-TIME SYSTEM

# Fig.4.

NETWORK — 202

CONTROLS

DATA

206

NTMS

PARAMETERS — 204

RUN-TIME SYSTEM